# EUROPÄISCHE PATENTANMELDUNG

(11) **EP 1 962 000 A1**
(43) Veröffentlichungstag der Anmeldung: **27.08.2008**
(21) Anmeldenummer: 07003919.3
(22) Anmeldetag: 26.02.2007
(51) Int. Cl.: F16J 15/32, F01D 11/00

(54) **Dichtung für eine Strömungsmaschine**

(71) Anmelder: SIEMENS AKTIENGESELLSCHAFT, 80333 München (DE)
(72) Erfinder: Gobrecht, Edwin, 40885 Ratingen (DE); Hammann, Achim, 53894 Kommern (DE); Knudsen, Dirk, 45964 Gladbeck (DE); Leu, Bernd, 40670 Meerbusch (DE); Peters, Karsten, 46485 Wesel (DE); Walkenhorst, Jan, 45479 Mülheim an der Ruhr (DE)

(57) **Zusammenfassung**

Die Erfindung betrifft eine Dichtung (6), vorzugsweise für eine Dampfturbine (1), wobei die Dichtung (6) ohne ein Sperrdampfsystem ausgebildet ist und lediglich im wesentlichen einen ersten mit Bürstendichtungen versehenen Dichtungsbereich und einen zweiten mit Bürstendichtungen versehenen Dichtungsbereich aufweist, wobei zwischen dem ersten und zweiten Dichtungsbereich (20, 21) ein Wrasendampfabsaugsystem angeordnet ist.

## Beschreibung

Die Erfindung betrifft eine Dichtung zum Abdichten eines Spaltes zwischen einem drehbaren Bauteil und einem den drehbaren Bauteil durch den Spalt beabstandeten feststehenden Bauteil, wobei die Dichtung einen ersten Dichtungsbereich umfassend eine erste Bürstendichtung zum Abdichten des Spaltes und einen zweiten Dichtungsbereich umfassend eine zweite Bürstendichtung zur Abdichtung des Spaltes aufweist.

Unter der Sammelbezeichnung Strömungsmaschinen werden Wasserturbinen, Dampf- und Gasturbinen, Windräder, Kreiselpumpen und Kreiselverdichter sowie Propeller zusammengefasst. Allen diesen Maschinen ist gemeinsam, dass sie dem Zweck dienen, einem Fluid Energie zu entziehen, um damit eine andere Maschine anzutreiben oder umgekehrt, einem Fluid Energie zuzuführen, um dessen Druck zu erhöhen. Unter einem Fluid sind Flüssigkeiten oder Gase zu verstehen, die strömende Bewegungen ausführen können.

Bei den vorgenannten Strömungsmaschinen ist es wichtig, um sie optimal betreiben zu können, dass sie ein abgeschlossenes System bilden, wobei darunter zu verstehen ist, dass das in der Strömungsmaschine bewegbare Strömungsmedium nicht durch einen Spalt zwischen einem drehbaren und einem feststehenden Bauteil der Strömungsmaschine ausströmt. In einer Dampfturbine als Ausführungsform einer Strömungsmaschine ist es daher wichtig, dass der Dampf nicht zwischen einem Gehäuse und dem Rotor ausströmt und in die Atmosphäre gelangt. Andererseits ist es ebenso wichtig, dass keine außerhalb der Dampfturbine befindlichen Fluide in die Dampfturbine gelangen. Daher werden große Anstrengungen unternommen, um den Spalt zwischen den drehbaren und den feststehenden Bauteilen abzudichten.

Bekannte Dichtungen sind beispielsweise die so genannten Labyrinthdichtungen. Allerdings führen solche Dichtungen nicht zu einer vollständigen Dichtheit, das bedeutet, dass ein vergleichsweise hoher Leckagestrom ausgebildet ist. Daher werden moderne Labyrinthdichtungen mit einem Wellendichtdampfsystem und einem Wrasendampfsystem ausgebildet. Die Systeme werden mittels aufwändigen Leittechnikanlagen gesteuert.

Das Sperrdampfsystem, das einen Wellendichtdampfsammler einschließlich einem Wellendichtdampfzu- und -ableitungsventil aufweist, ist derart ausgebildet, dass Sperrdampf in die Dichtung strömt, der dem arbeitsleistenden Strömungsmedium entgegenwirkt. Der aus der Dichtung ausströmende Sperrdampf wird durch das Wrasendampfsystem, das einen Wrasendampfsammler, eine Wrasendampfabsaugung und einen Wrasendampfkondensator umfasst, abgesaugt. Der Wrasendampf beinhaltet dadurch einen Anteil Sperrdampf und einen Anteil Atmosphären-Medium und wird im Wrasendampfkondensator aufwändig getrennt. Der kondensierte Dampf wird dem Kreislauf im Kondensator wieder zugeführt.

Das Wrasendampfsystem ist aufwändig und kostenintensiv und führt darüber hinaus zu einer verlängerten Bauform der Dampfturbine.

Es ist Aufgabe der Erfindung, eine Dichtung für eine Strömungsmaschine anzubieten, die zu einer verkürzten Baulänge der Strömungsmaschine führt.

Gelöst wird diese Aufgabe durch eine Dichtung zum Abdichten eines Spaltes zwischen einem drehbaren Bauteil und einem dem drehbaren Bauteil durch den Spalt beabstandeten feststehenden Bauteil, wobei die Dichtung einen ersten Dichtungsbereich umfassend eine erste Bürstendichtung zum Abdichten des Spaltes und einen zweiten Dichtungsbereich umfassend eine zweite Bürstendichtung zum Abdichten des Spaltes aufweist, wobei zwischen dem ersten und dem zweiten Dichtungsbereich ein Wrasendampfabsaugsystem angeordnet ist.

Weitere vorteilhafte Ausgestaltungen sind in den Unteransprüchen angegeben.

Die Erfindung geht von dem Aspekt aus, dass geeignete Dichtungen in Form von Bürstendichtungen zu einem reduzierten Leckagedampfmassenstrom durch die Wellendichtung führen und auf ein Sperrdampfsystem dadurch verzichtet werden kann. Die Bürstendichtungen weisen einen um 90% reduzierten Massenstrom auf gegenüber herkömmlichen Labyrinthdichtungen. Das bedeutet, dass ein reduzierter Leckagedampfmassenstrom entsteht.

Im Sinne der Erfindung ist es zwingend erforderlich, dass verbesserte Dichtungen in Form von Bürstendichtungen verwendet werden, denn die Strömungsmaschine muss auch im abgeschalteten Zustand gegenüber einem Lufteinbruch geschützt werden. Der Lufteinbruch muss so gering gehalten werden, dass es mittels der Evakuierungseinrichtung in Form des Wrasendampfsystems möglich ist, die eingebrochene Luft abzusaugen. Dadurch wird es zwingend erforderlich sein, Bürstendichtungen zu verwenden.

Durch den Wegfall der Sperrdampfkammer kann die Baulänge der Strömungsmaschine verkürzt werden.

Nachfolgend werden Ausführungsbeispiele der erfindungsgemäßen Dichtung anhand der beigefügten schematischen Zeichnungen näher erläutert.

Es zeigen:
- Figur 1: eine Querschnittsansicht einer Dampfturbine,
- Figur 2: ein vergrößerter Ausschnitt A der Dichtung der Dampfturbine aus Figur 1.

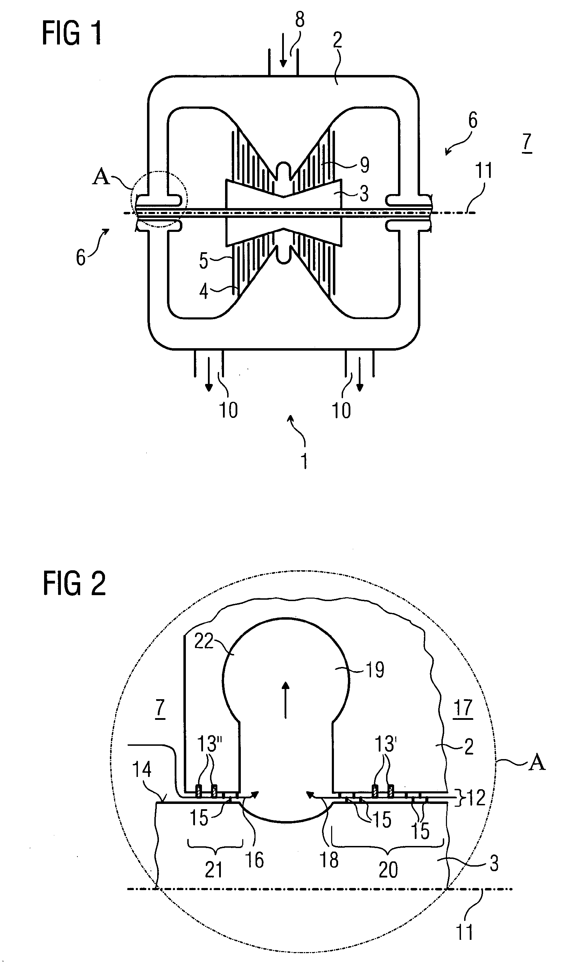

In der Figur 1 ist eine Querschnittsansicht einer Dampfturbine 1 zu sehen. Die Dampfturbine 1 umfasst ein feststehendes Gehäuse 2 und ein innerhalb des Gehäuses 2 drehbar gelagerten Rotor 3 auf. Der drehbar gelagerte Rotor 3 rotiert um die Rotationsachse 11. An dem Gehäuse 2 sind Leitschaufeln 4 angeordnet, wobei der Übersichtlichkeit wegen lediglich eine Leitschaufel mit dem Bezugszeichen 4 versehen wurde. Der Rotor 3 weist auf dem Umfang angeordnete Laufschaufeln 5 auf, wobei der Übersichtlichkeit wegen lediglich eine Laufschaufel mit dem Bezugszeichen 5 versehen wurde.

Der drehbar gelagerte Rotor 3 wird mittels einer Dichtung 6 gegenüber der Atmosphäre 7 abgedichtet.

Im Betrieb strömt über einen Einströmstutzen 8 Frischdampf in die Dampfturbine 1 und strömt anschließend durch einen Strömungskanal 9 und wird dabei entspannt. Die Energie des Dampfes wird hierbei in Rotationsenergie des Rotors 3 umgesetzt. Die Rotation des Rotors 3 wird anschließend dazu verwendet, um beispielsweise Generatoren anzutreiben.

Nachdem der Dampf den Strömungskanal durchströmt hat, strömt dieser über Ausgangsöffnungen 10 aus der Dampfturbine 1 heraus.

Der Übersichtlichkeit wegen sind die erforderlichen Einrichtungen für das Wrasendampfsystem nicht eingezeichnet.

In der Figur 2 ist ein vergrößerter Ausschnitt des Bereiches A aus der Figur 1 zu sehen. Um den Spalt 12 zwischen dem Gehäuse 2 und dem Rotor 3 abzudichten, werden Bürstendichtungen 13 verwendet. Die Bürstendichtungen 13 umfassen eine Vielzahl von nebeneinander angeordneten Bürsten, die im Betrieb die Oberfläche des Rotors 3 berühren können, um dadurch eine besonders gute Dichtwirkung zu erreichen. Um die Dichtwirkung zu erhöhen können neben den Bürstendichtungen 13 herkömmliche Labyrinthdichtungen 15 angeordnet werden.

Trotz gut wirkender Bürstendichtungen 13 kann es dennoch geschehen, dass unerwünschte Atmosphärenluft 7 über einen Einbruchsweg 16 in die Dampfturbine 1 strömt. Der im Innenraum 17 befindliche Dampf wird naturgemäß durch einen Dichtungspfad 18 in Richtung Atmosphärenluft strömen. In der Wrasendampfkammer 19 wird die Atmosphärenluft und das Strömungsmedium gesammelt, wobei dieses Gemisch als Wrasen bezeichnet wird, und über die Wrasendampfkammer 19 zu einem Wrasendampfkondensator geführt und dort wieder getrennt, wobei der Dampf dem Kreislauf wieder zugeführt wird.

Der Rotor 3 ist als drehbares Bauteil und das Gehäuse 2 als dem drehbaren Bauteil durch den Spalt 12 beabstandeten feststehenden Bauteil 2 ausgebildet. Die Dichtung 6 umfasst einen ersten Dichtungsbereich 20 mit einer ersten Bürstendichtung 13' zum Abdichten des Spaltes 12 und einen zweiten Dichtungsbereich 21 zum Abdichten des Spaltes 12. Zwischen dem ersten und dem zweiten Dichtungsbereich 20, 21 ist die Wrasendampfkammer 19 angeordnet.

An diese Wrasendampfkammer 19 ist ein nicht näher dargestelltes Wrasendampfabsaugsystem zum Absaugen von im Betrieb durch den ersten und zweiten Dichtungsbereich strömenden Leckströmungsmedien angeordnet. Als Leckströmungsmedien können zum einen die Atmosphärenluft 7 und zum anderen das Strömungsmedium im Innenraum 17 sein.

Dies Wrasendampfkammer 19 ist hierbei als Ringraum 22 ausgebildet.

Die Dichtung ist zum Abdichten des Spaltes 12 gegenüber einem Austreten von Betriebsströmungsmedium ausgebildet.

## Patentansprüche

1. Dichtung (6) zum Abdichten eines Spaltes (12) zwischen einem drehbaren Bauteil (3) und einem dem drehbaren Bauteil (3) durch den Spalt (12) beabstandeten feststehenden Bauteil (2),
wobei die Dichtung (6) einen ersten Dichtungsbereich (20) umfassend eine erste Bürstendichtung (13') zum Abdichten des Spaltes (12) und einen zweiten Dichtungsbereich (21) umfassend eine zweite Bürstendichtung (13'') zum Abdichten des Spaltes (12) aufweist,
**dadurch gekennzeichnet, dass**
zwischen dem ersten und zweiten Dichtungsbereich (20, 21) ein Wrasendampfabsaugsystem angeordnet ist.

2. Dichtung (6) nach Anspruch 1,
wobei das Wrasendampfabsaugsystem zum Absaugen von im Betrieb durch den ersten und zweiten Dichtungsbereich (20, 21) strömendem Leckströmungsmedium ausgebildet ist.

3. Dichtung (6) nach Anspruch 1 oder 2,
wobei eine Wrasendampfkammer einen Ringraum (19) aufweist.

4. Dichtung (6) nach einem der vorhergehenden Ansprüche,
wobei die Dichtung (6) zum Abdichten des Spaltes (12) gegenüber einem Austreten von Betriebsströmungsmedium ausgebildet ist.

5. Dichtung (6) nach einem der vorhergehenden Ansprüche, geeignet für eine Strömungsmaschine.

6. Dichtung (6) nach Anspruch 5,
wobei die Strömungsmaschine als Dampfturbine (1) ausgebildet ist.

7. Dichtung (6) nach einem der vorhergehenden Ansprüche,
wobei der erste Dichtungsbereich (20) an einen Betriebsströmungsmediumsbereich angrenzt.

8. Dichtung (6) nach Anspruch 7,
wobei im Betrieb der Strömungsmediumsbereich mit Betriebsströmungsmedium gefüllt ist.

9. Dichtung (6) nach einem der vorhergehenden Ansprüche,
wobei der zweite Dichtungsbereich (21) an einen Außenbereich angrenzt.

10. Dichtung (6) nach Anspruch 9,
wobei der Außenbereich mit Atmosphärenluft (7) gefüllt ist.
